# EUROPÄISCHE PATENTSCHRIFT

(11) **EP 4 075 117 B1**
(45) Veröffentlichungstag und Bekanntmachung des Hinweises auf die Patenterteilung: **01.05.2024**
(21) Anmeldenummer: 22161791.3
(22) Anmeldetag: 14.03.2022
(51) Int. Cl.: G01N 9/02, G01B 11/25, G01B 11/30, G01F 17/00, F01D 21/00, G01B 11/06

(54) **VERFAHREN UND VORRICHTUNG ZUR CHARAKTERISIERUNG EINER BESCHICHTUNG**
METHOD AND DEVICE FOR CHARACTERIZING A COATING
MÉTHODE ET DISPOTIF POUR LA CARACTÉRISATION D'UN REVÊTEMENT

(30) Priorität: 14.04.2021 DE 102021109359; 15.06.2021 DE 102021115492
(43) Veröffentlichungstag der Anmeldung: 19.10.2022
(73) Patentinhaber: MTU Aero Engines AG, 80995 München (DE)
(72) Erfinder: Beck, Florian, 80995 München (DE); Piorun, Steven, 80995 München (DE); Büttner, Sascha, 80995 München (DE); Hertter, Manuel, 80995 München (DE); Rau, Christoph, 80995 München (DE)

(56) Entgegenhaltungen:
- WO-A1-2021/051197
- CN-A- 102 507 370
- JP-A- 2014 211 395
- US-A- 4 783 341

## Beschreibung

### Technisches Gebiet

Die vorliegende Erfindung betrifft ein Verfahren und eine Vorrichtung zur Charakterisierung einer Beschichtung.

### Stand der Technik

Die Bauteile eines Flugtriebwerks können im Betrieb bspw. hohen Temperaturen, Drücken, sowie Lastwechselzahlen ausgesetzt sein. Aufgrund dieser Einsatzbedingungen und der hohen Materialbeanspruchung können sich bereits in der Herstellung hohe Anforderungen ergeben, z. B. an die Bearbeitungsgenauigkeit. Bspw. kann die Einhaltung eines minimalen Spalts zwischen den rotierenden Laufschaufeln und dem feststehenden Gehäuse eines Verdichters von Bedeutung sein. Die Enden bzw. Spitzen der rotierenden Laufschaufeln werden bspw. beim sogenannten Anstreifen in das feststehende Gehäuse einem direkten Reibkontakt mit dem Gehäuse ausgesetzt.

Das Gehäuse kann dazu mit einem sogenannten Einlaufbelag beschichtet werden, um den Verschleiß an den Spitzen der rotierenden Laufschaufeln zu reduzieren. Der Einlaufbelag kann auch die Abdichtung zwischen den Enden bzw. Spitzen der rotierenden Laufschaufeln und dem feststehenden Gehäuse verbessern. Gehäuse mit einem Einlaufbelag sind aus dem Stand der Technik bekannt. Diese Einlaufbeläge können insbesondere als Beschichtung aufgebracht werden, und die vorliegende Anmeldung richtet sich auf die Charakterisierung einer aufgebrachten Beschichtung. Dabei ist sie im Allgemeinen nicht auf Einlaufbeläge beschränkt, die vorstehenden Erläuterungen sollen lediglich ein besonders vorteilhaftes Anwendungsgebiet illustrieren.

Aus der WO 2021/051197 A1 ist ein Verfahren zum Ermitteln einer Dichte einer Pulverschicht bekannt, die im Zuge eines generativen Fertigungsverfahrens auf eine Trägerplatte aufgebracht wird.

Die CN 102 507 370 A betrifft ein Verfahren für Dichtemessungen an beschichteten Mikrokügelchen.

Die US 4,783,341 A beschreibt eine Dichtemessung mittels Gammastrahlung an einer Beschichtung eines Triebwerksbauteils.

Die JP 2014 211395 A betrifft eine Messung der sich im Zuge des Austrocknens ändernden Dichte von bspw. einer Farb- oder Lackschicht.

### Darstellung der Erfindung

Der vorliegenden Erfindung liegt das technische Problem zugrunde, ein vorteilhaftes Verfahren zur Charakterisierung einer Beschichtung anzugeben.

Dies wird erfindungsgemäß mit dem Verfahren gemäß Anspruch 1 gelöst. Dabei wird vor dem Beschichten eine Masse und/oder ein Volumen eines Grundkörpers gemessen. Nachdem die Beschichtung auf den Grundkörper aufgebracht wurde, wird der beschichtete Grundkörper gewogen und sein Volumen optisch gemessen. Eine Differenz der Masse und des Volumens vor und nach dem Beschichten des Grundkörpers wird bestimmt, und daraus wird eine Dichte der Beschichtung ermittelt. Insgesamt erhält man unterschiedliche Parameter zur Charakterisierung der Beschichtung, wie die Dichte bzw. auch ihr Volumen und ihre Masse.

Diese Verfahrensführung, insbesondere die optische Volumenmessung, bietet bspw. den Vorteil, dass die Bestimmung der Dichte über ein größeres Schichtvolumen erfolgen kann als bspw. eine mechanische Vermessung von Proben, z. B. manuell erzeugten Quadern, die für die Vermessung z. B. aus einem Einlaufbelag herausgeschnitten und geglättet werden (wobei es auch zu Ausbrüchen etc. kommen kann). Das Verfahren kann zudem zerstörungsfreie Messungen ermöglichen, die nicht nur genau und schnell sind, sondern auch vergleichsweise einfach durchgeführt werden können. Generell kann die optische Messung auch einen Einfluss der Probengeometrie bzw. Schichtdicke verringen. Im Vergleich zu einer Härte- bzw. Makrohärtemessung an lokalen Messpunkten kann bspw. auch eine Streuung geringer sein, speziell bei inhomogenen Schichten.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens-, bzw. Verwendungsaspekten unterschieden wird; jedenfalls implizit ist die Offenbarung hinsichtlich sämtlicher Anspruchskategorien zu lesen. Wird bspw. ein Vorteil der Vorrichtung in einer bestimmten Anwendung beschrieben, ist dies zugleich als Offenbarung einer entsprechenden Verwendung zu verstehen.

Der Grundkörper kann eine gesonderte Probe zur Prozessüberwachung oder ein Bauteil sein, welches zum Einsetzen in die Strömungsmaschine bestimmt ist. Sollten mehrere Schichten aus unterschiedlichen Materialien auf einen Grundkörper aufgebracht werden, kann mit wiederholten Abfolgen der Schritte i) und ii) eine jeweilige Schicht gesondert charakterisiert werden, ebenso kann die Schichtenfolge mit einer Messung zu Beginn und am Ende aber auch integral vermessen werden. Der Grundkörper kann auch bereits eine andere Schicht oder Schichtenfolge aufweisen, auf welche dann die zu charakterisierende Beschichtung aufgebracht wird (er ist also nicht zwingend homogen). Das vorliegende Verfahren lässt sich auch gut in einem laufenden Herstellungsverfahren automatisieren, es kann damit also z. B. auch eine Schadensdetektion bzw. Qualitätsüberwachung über eine vordefinierte Abweichung der Schichtparameter ermöglicht werden.

Mögliche optische Messmethoden für die Volumenmessung umfassen bspw. eine Fokusvariation oder eine Laufzeitmessung (bspw. ein sogenanntes Time-of-Flight-Verfahren). Die optische Messung ermöglicht i.A. die Oberflächenform von Objekten berührungslos zu digitalisieren und dreidimensional darzustellen, woraus das Volumen ermittelt werden kann. Die Anwendung eines optischen Messverfahrens kann, etwa im Vergleich zu radiometrischen Dichtemessungen, auch sicherheits- bzw. arbeitsschutztechnisch von Vorteil sein. Zudem wäre ein radiometrisch gemessener Wert auch indirekt und im Vergleich besonders kalibrierungsträchtig, was prinzipiell auch für Röntgen- bzw. Ultraschallverfahren gelten würde. Die direkte Messung der Dichte über Volumen und Masse kann bspw. auch Iterationszyklen bei der Parameterentwicklung verkürzen und mitunter gänzlich vermeiden helfen.

Auch unabhängig von spezifischen optischen Messverfahren kann der Grundkörper dabei in einer Aufnahme angeordnet, insbesondere eingelegt werden, bevorzugt ist er darin gegen ein Verrutschen gesichert gehalten, z. B. magnetisch oder auch mit einer anderen Fixiermethode (z. B. kraft- und/oder formschlüssig). Bevorzugt ist er in gewissem Rahmen frei positionierbar, dann aber fixiert gehalten, was bspw. den manuellen Handhabungsaufwand reduzieren kann. Eine Einpunktaufnahme kann die Messfläche bzw. -genauigkeit erhöhen. Die eigentliche Volumenmessung kann dann bspw. auch automatisiert erfolgen, was z. B. durch eine einheitliche Grundkörpergeometrie (etwa Knopfform) begünstigt sein kann. In einem entsprechenden Algorithmus kann bspw. auch die Grundkörpergeometrie hinterlegt bzw. berücksichtigt sein, was z. B. den automatisierten Ablauf der Volumenmessung beschleunigen kann. Gemäß einer bevorzugten Ausführungsform erfolgt die optische Messung des Volumens in einem Streifenlicht-Projektionsverfahren. Es kann z. B. mit einem Projektor strukturiertes Licht (z. B. Streifen) auf den zu messenden Grundkörper projiziert und von mindestens einer Kamera aufgenommen werden. Bei bekannter Lage des Projektors und der Kamera kann aus der Abweichung zwischen der theoretischen ("ungestörten") und der gemessenen tatsächlichen Streifenlage den Oberflächenverlauf und daraus das Volumen bestimmt werden (Triangulation). Dies zur Illustration, Streifenlicht-Projektionsmessgeräte sind an sich bekannt und kommerziell erhältlich, z. B. in der Produktserie Atos der Firma GOM.

In bevorzugter Ausgestaltung ist eine Dichte des Grundkörpers bekannt und wird vor dem Beschichten nur das Volumen oder die Masse gemessen, bevorzugt letzteres. Die Messung der Masse, z. B. des gestrahlten Grundkörpers, kann relativ schnell und einfach erfolgen, mit der bekannten Dichte lässt sich trotzdem das Volumen des Grundkörpers bestimmen. Die im Allgemeinen mögliche zusätzliche optische Volumenmessung kann die Genauigkeit erhöhen.

Gemäß einer bevorzugten Ausführungsform wird bei der optischen Messung des Volumens zugleich eine Oberflächenrauheit der Beschichtung optisch gemessen. Die Oberflächenrauheit gibt i.A. Unebenheiten auf der Oberfläche wieder, bspw. auch eine sogenannte offene Porosität, und kann eine zusätzliche Charakterisierung der Beschichtung bieten. Die Messung der Oberflächenrauheit erfolgt vorzugsweise zeitgleich mit der optischen Messung des Volumens, sodass es bspw. keine Beeinträchtigung des Durchsatzes gibt.

Bei einer bevorzugten Verfahrensführung wird der Messkörper bei der optischen Volumenmessung digitalisiert, also ein digitales dreidimensionales Modell (CAD-Modell) erstellt. Der Messkörper bezeichnet i.A. das von einer Messung erfasste Objekt und kann sowohl ein Grundkörper, als auch ein beschichteter Grundkörper sein. Die in dem Modell abgebildete Oberflächenrauheit der Beschichtung kann zum Abgleich mit einer mechanischen Messung nachbearbeitet werden, bspw. durch eine softwareseitige Nachbearbeitung geglättet werden (z. B. Auffüllen der Täler zwischen den Rauheitsspitzen).

Vorzugsweise wird diese Nachbearbeitung in ein automatisiertes Messprogramm integriert, wobei die Sensitivität der für die Glättung verwendeten Korrekturfunktion individuell geregelt werden kann. Diese digitale Nachbearbeitung kann eine bessere Vergleichbarkeit zu einer mechanischen Messung ermöglichen, bei der bspw. mit einem Messschieber gemessen wird. Dabei liegt der Messschieber nur auf den Rauheitsspitzen der Oberfläche auf, weshalb eine mechanische Messung mit dem Messschieber einen Messunterschied ergeben kann, speziell bei sehr kleinen Geometrien.

Gemäß einer bevorzugten Ausführungsform beträgt die Schichtdicke der Beschichtung mindestens 0,05 mm und maximal 5 mm, wobei die Unter- und Obergrenze auch unabhängig voneinander offenbart sein sollen. Weitere Untergrenzen können bspw. bei 0,08 mm, 0,1 mm, 0,5 mm oder 1 mm liegen. Auch unabhängig von der Dichte kann es sich bei der Beschichtung insbesondere um eine thermisch gespritzte Schicht handeln, die z. B. direkt im aufgebrachten Zustand ("as sprayed") und/oder nach einer Wärmebehandlung charakterisiert werden kann.

Bei einer bevorzugten Ausführungsform wird eine zu vermessende, insbesondere glänzende Oberfläche vor der optischen Messung mit einem Mittel zur Reduzierung von Reflexionen behandelt. Die zu vermessende Oberfläche kann sowohl die Oberfläche der Beschichtung als auch die Oberfläche des Grundkörpers sein. Es kann bspw. Kreidespray oder Titandioxid auf die Oberfläche aufgebracht werden, die Oberfläche also z. B. geweißt werden, um mögliche störende Reflexionen bei der optischen Messung zu reduzieren. Eine weitere Möglichkeit ist das Mattieren des Grundkörpers durch ein entsprechendes Bearbeitungsverfahren wie Gleitschleifen.

Die Erfindung betrifft auch ein Verfahren zum Herstellen eines Bauteils für eine Strömungsmaschine, bspw. ein Flugtriebwerk, bei welchem das Bauteil beschichtet und die Dichte der Beschichtung in einer vorliegend offenbarten Weise ermittelt wird. Im Allgemeinen kann die Charakterisierung der Beschichtung auch an dem Bauteil selbst erfolgen, dieses bzw. das zugrundeliegende Werkstück kann also der "Grundkörper" sein. Bevorzugt wird das Bauteil beschichtet und wird parallel, bspw. im selben Beschichtungsvorgang, ein von dem Bauteil verschiedener Grundkörper zur Charakterisierung der Beschichtung beschichtet. Solche Proben können in einem laufenden Herstellungsprozess erzeugt werden und die gleiche Beschichtung wie die hergestellten Bauteile aufweisen. Damit lässt sich die Beschichtung der Bauteile anhand der Messwerte der Proben charakterisieren, z. B. auch wenn das Bauteil als Ganzes zu groß für das optische Messsystem ist.

Gemäß einer bevorzugten Ausführungsform wird die Beschichtung durch thermisches Spritzen aufgebracht, z. B. durch Flammspritzen, Hochgeschwindigkeitsflammspritzen oder Plasmaspritzen. Zur Illustration, als Schichtwerkstoffe können bspw. CoNiCrAlY/BN/PE, WC/Co, Cr₃C₂/NiCr oder auch CuNiIn aufgebracht werden (je nach Anwendung), das vorliegende Verfahren lässt sich aber selbstverständlich auch auf andere Schichtwerkstoffe anwenden. Thermisch gespritzte Schichten können bspw. eine gewisse Rauheit bzw. Porosität haben, weswegen bspw. eine Volumenmessung über verdrängtes Wasser durch eindringendes Wasser verfälscht sein könnte, umgekehrt also die optische Volumenmessung von besonderem Vorteil ist. Es kann bspw. auch ein thermisch gespritztes Schichtsystem mit einer Haftschicht und einer Deckschicht aufgebracht werden, wobei das Schichtsystem im Gesamten charakterisiert werden kann (Schritt ii vor dem Aufbringen der Haftschicht, Schritt iii nach der Deckschicht) oder auch nur die Deckschicht (Schritt ii nach dem Aufbringen der Haftschicht).

In bevorzugter Ausgestaltung wird die Beschichtung, insbesondere eine thermische gespritzte Beschichtung, nach dem Aufbringen wärmebehandelt. Dies kann bspw. einem Ausbrennen dienen, etwa von Polyester. Bevorzugt wird dabei der Schritt iii), also die Volumen- und Massemessung, vor der Wärmebehandlung durchgeführt. Damit kann z. B. vor einer längeren Wartezeit (mehrere Stunden, z. B. mindestens fünf Stunden) eine gewisse Prozesssicherheit geschaffen werden, bspw. dahingehend, ob eine Nacharbeit erforderlich ist. Dies kann insgesamt in zeitlicher Hinsicht, also den Durchsatz betreffend von Vorteil sein. Nach der Wärmebehandlung kann dann optional nochmals eine Volumen- und Massemessung vorgenommen werden.

Vorzugsweise kann das Bauteil ein Gehäuseteil der Strömungsmaschine sein, insbesondere des Verdichters bzw. des Fans im Einlaufbereich eines Flugtriebwerks oder der Turbine. Vorzugsweise kann die Beschichtung ein Einlaufbelag des Gehäuseteils sein, insbesondere ein Einlaufbelag des Verdichters bzw. des Fans oder der Turbine.

Die Erfindung betrifft auch eine Vorrichtung zur Charakterisierung einer Beschichtung. Die Vorrichtung weist eine Aufnahme zum Anordnen des Grundkörpers auf, z. B. eine Haltevorrichtung (siehe vorne). Zum Zwecke der optischen Volumenmessung des in der Aufnahme angeordneten Grundkörpers verfügt die Vorrichtung über eine optische Volumenmesseinheit, die z. B. einen Projektor und eine Kamera umfassen kann. Zur Messung der Masse des in der Aufnahme angeordneten Grundkörpers verfügt sie ferner über eine Wägeeinheit, z. B. einer Präzisionswaage.

Außerdem verfügt die Vorrichtung über eine Steuereinheit, wobei diese dazu eingerichtet ist, die Mess- und Wägeeinheit zur Durchführung der vorstehend erläuterten Messvorgänge zu veranlassen. Außerdem ist sie dazu eingerichtet, aus den Volumenund Massemessungen eine Dichte der Beschichtung zu ermitteln. Das optische Messsystem und die Wägeeinheit können bspw. integriert ausgeführt sein, was die Ermittlung des Gewichts während der optischen Messung erlaubt und einen zusätzlichen Zeitvorteil ergibt. Außerdem kann die Vorrichtung eine automatisierte Erfassung anderer Schichtparameter, wie z. B. der Schichtdicke, ermöglichen, die Daten (z. B. das Volumenmodell) an ein Qualitätssicherungssystem übermitteln und darin archivieren und eine Auswertung der erfassten Daten im Rahmen einer statistischen Prozesskontrolle (SPC) erlauben.

Die Erfindung betrifft auch ein Computerprogrammprodukt, welches Befehle aufweist, die bei der Ausführung durch eine Steuereinheit einer solchen Vorrichtung diese veranlassen, die geschilderten Verfahrensschritte vorzunehmen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: in schematischer Darstellung eine erfindungsgemäße Vorrichtung zur Charakterisierung einer Beschichtung;
- Figur 3: in schematischer Darstellung die Oberflächenrauheit der Beschichtung aus Figur 2.

### Bevorzugte Ausführung der Erfindung

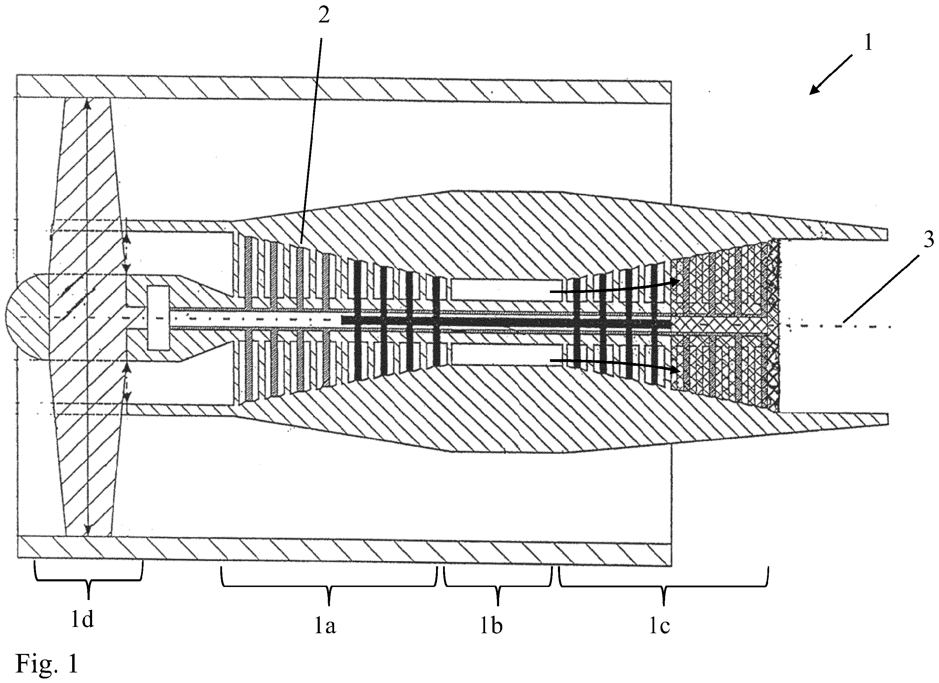

**Figur 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b, Turbine 1c und Fan 1d. Sowohl der Verdichter 1a als auch die Turbine 1c sind jeweils aus mehreren Stufen aufgebaut, jede Stufe setzt sich aus einem Leit- und einem Laufschaufelkranz zusammen. Die Laufschaufelkränze rotieren im Betrieb um die Längsachse 3 der Strömungsmaschine 1. Im Verdichter 1a wird dabei die angesaugte Luft komprimiert, und dann in der nachgelagerten Brennkammer 1b mit hinzugemischtem Kerosin verbrannt. Das Heißgas wird in der Turbine 1c expandiert und treibt die Laufschaufelkränze an. Das Gehäuseteil 2 des Verdichters 1a kann bspw. mit einem sogenannten Einlaufbelag versehen werden.

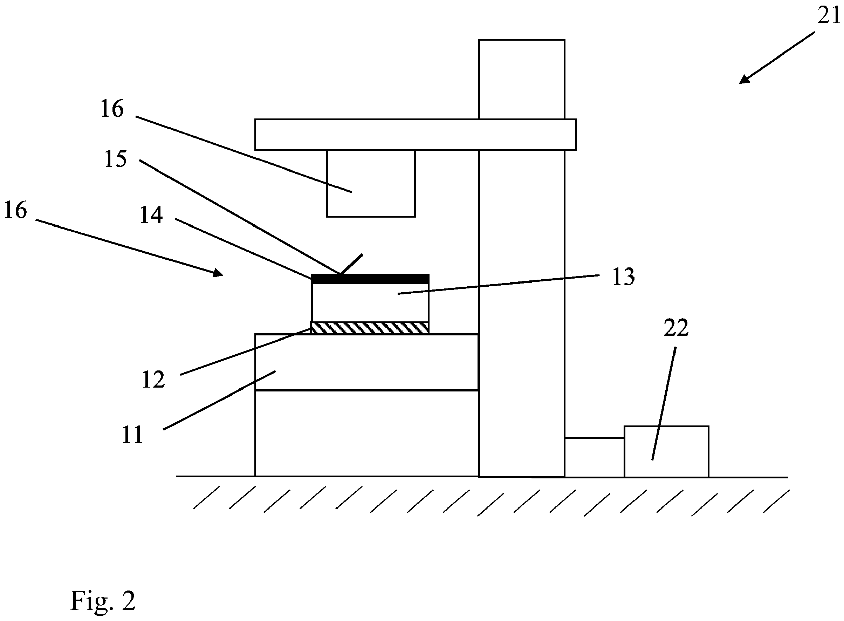

**Figur 2** zeigt in schematischer Darstellung eine erfindungsgemäße Vorrichtung 21 zur Charakterisierung einer Beschichtung 14, bspw. eines Einlaufbelags. Die Vorrichtung 21 umfasst eine Aufnahme 12 zum Anordnen eines Grundkörpers 13, eine optische Messeinheit 16 zur Volumenmessung des in der Aufnahme 12 angeordneten Grundkörpers 13, eine Wägeeinheit 11 zur Messung der Masse des in der Aufnahme 12 angeordneten Grundkörpers 13 und eine Steuereinheit 22. Die optische Messeinheit 16 umfasst einen Projektor und zwei Kameras in einem dreidimensionalen Messsystem (nicht im Einzelnen dargestellt), die Messung erfolgt in einem Streifenlicht-Proj ektionsverfahren.

Vor dem Beschichten misst die Wägeeinheit 11 die Masse des Grundkörpers 13, und in diesem Beispiel wird auch sein Volumen mit der optischen Messeinheit 16 gemessen. Nach dem Beschichten werden das Volumen und die Masse des Grundkörpers 13 mit der aufgebrachten Beschichtung 14 gemessen, daraus wird zur Charakterisierung der Beschichtung ihre Dichte bestimmt. Die geschilderte Integration von optischer und Gewichtsmessung ist exemplarisch, im Allgemeinen kann die Gewichtsmessung auch unabhängig von der Volumenmessung mit einer separaten Wägeeinheit erfolgen.

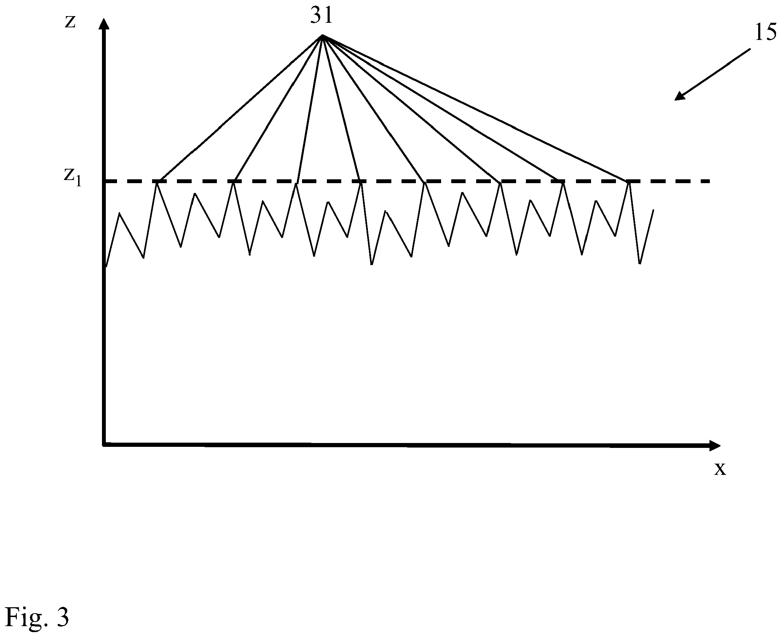

**Figur 3** zeigt in schematischer Darstellung in einem digitalen Modell die optisch gemessene Oberflächenrauheit der Oberfläche 15 der Beschichtung 14. Die Rauheitsspitzen der Oberfläche 15 werden mit dem Bezugszeichen 31 referenziert. Das Bezugszeichen z₁ referenziert eine Glättung der Oberflächenrauheit, um die Rauheitsspitzen 31 zu eliminieren. Dadurch kann die Messung mit einer mechanischen Messung mit bspw. einem Messschieber abgeglichen werden.

### BEZUGSZEICHENLISTE

| | |
|---|---|
| Strömungsmaschine | 1 |
| Verdichter | 1a |
| Brennkammer | 1b |
| Turbine | 1c |
| Fan | 1d |
| Gehäuseteil des Verdichters | 2 |
| Drehachse | 3 |
| Wägeeinheit | 11 |
| Aufnahme | 12 |
| Grundkörper | 13 |
| Beschichtung | 14 |
| Oberfläche der Beschichtung | 15 |
| Optische Messeinheit | 16 |
| Vorrichtung | 21 |
| Steuereinheit | 22 |
| Rauheitsspitzen der Oberfläche der Beschichtung | 31 |
| Geglättete Oberfläche der Beschichtung | z₁ |

## Patentansprüche

1. Verfahren zum Herstellen eines Bauteils für eine Strömungsmaschine (1), bei welchem das Bauteil (2) beschichtet wird,
wobei die Beschichtung (14) charakterisiert wird, indem
i) eine Masse und/oder ein Volumen eines Grundkörpers (13) vor dem Beschichten gemessen wird;
ii) eine Masse und ein Volumen des Grundkörpers (13) mit der aufgebrachten Beschichtung (14) gemessen werden;
iii) zur Charakterisierung der Beschichtung (14) aus den Volumen- und Massemessungen eine Dichte der Beschichtung (14) ermittelt wird;
wobei das Volumen optisch gemessen wird.

2. Verfahren nach Anspruch 1, bei welchem die optische Messung in einem Streifenlicht-Projektionsverfahren erfolgt.

3. Verfahren nach einem der vorstehenden Ansprüche, bei welchem eine Dichte des Grundkörpers (13) bekannt ist und vor dem Beschichten nur das Volumen oder die Masse gemessen wird.

4. Verfahren nach einem der vorstehenden Ansprüche, bei welchem bei der optischen Messung des Volumens zugleich eine Oberflächenrauheit der Beschichtung (14) optisch gemessen wird.

5. Verfahren nach Anspruch 4, bei welchem die Oberflächenrauheit der Beschichtung (14) in einem anhand der Volumenmessung erstellten Modell zum Abgleich mit einer mechanischen Messung nachbearbeitet wird.

6. Verfahren nach einem der vorstehenden Ansprüche, bei welchem die Beschichtung (14) eine Schichtdicke von mindestens 0,05 mm und maximal 5 mm hat.

7. Verfahren nach einem der vorstehenden Ansprüche, bei welchem noch vor Schritt ii) gemäß Anspruch 1 eine zu vermessene Oberfläche (15) der Beschichtung (14) mit einem Mittel zur Reduzierung von Reflexionen behandelt wird.

8. Verfahren nach einem der vorstehenden Ansprüche, bei welchem das Bauteil (2) beschichtet wird und parallel damit ein von dem Bauteil (2) verschiedener Grundkörper (13) zur Charakterisierung der Beschichtung (14) beschichtet wird.

9. Verfahren nach einem der vorstehenden Ansprüche, bei welchem die Beschichtung eine thermisch gespritzte Beschichtung ist.

10. Verfahren nach einem der vorstehenden Ansprüche, bei welchem die Beschichtung nach dem Aufbringen wärmebehandelt wird, wobei Schritt iii) vor der Wärmebehandlung durchgeführt wird.

11. Verfahren nach einem der vorstehenden Ansprüche, bei welchem das Bauteil (2) ein Gehäuseteil (2) ist.

12. Verfahren nach Anspruch 11, bei welchem die Beschichtung (14) ein Einlaufbelag des Gehäuseteils (2) ist.

13. Vorrichtung (21) zur Charakterisierung einer Beschichtung (14), mit
einer Aufnahme (12) zum Anordnen eines Grundkörpers (13),
einer optischen Messeinheit (16) zur Volumenmessung des in der Aufnahme (12) angeordneten Grundkörpers (13),
einer Wägeeinheit (11) zur Messung der Masse des in der Aufnahme (12) angeordneten Grundkörpers (13), und
einer Steuereinheit (22),
wobei die Steuereinheit (22) dazu eingerichtet ist, wenn der Grundkörper (13) vor und nach dem Beschichten in der Aufnahme (12) angeordnet wird, die Mess- (16) und die Wägeeinheit (11) zur Durchführung der Schritte gemäß den Ziffern i) und ii) nach Anspruch 1 zu veranlassen und gemäß Ziffer iii) die Dichte der Beschichtung (14) zu ermitteln.

14. Computerprogrammprodukt, welches Befehle aufweist, die bei der Ausführung durch eine Steuereinheit (12) einer Vorrichtung (21) gemäß Anspruch 13 diese zur Veranlassung und Durchführung der Schritte i) bis iii) nach Anspruch 1 veranlassen.

## Claims

1. Method for producing a component for a turbomachine (1), in which the component (2) is coated,
wherein the coating (14) is **characterized by**
i) a mass and/or a volume of a main body (13) being measured prior to coating;
ii) a mass and a volume of the main body (13) with the applied coating (14) being measured;
iii) a density of the coating (14) being determined from the volume measurements and mass measurements in order to characterize the coating (14);
wherein the volume is measured optically.

2. Method according to claim 1, in which the optical measurement takes place in a structured-light projection method.

3. Method according to either of the preceding claims, in which a density of the main body (13) is known and only the volume or the mass is measured before coating.

4. Method according to any of the preceding claims, in which, during the optical measurement of the volume, a surface roughness of the coating (14) is measured optically at the same time.

5. Method according to claim 4, in which the surface roughness of the coating (14) is post-processed in a model which is created on the basis of the volume measurement in order to be compared with a mechanical measurement.

6. Method according to any of the preceding claims, in which the coating (14) has a layer thickness of at least 0.05 mm and at most 5 mm.

7. Method according to any of the preceding claims, in which a surface (15) of the coating (14) to be measured is treated with an agent for reducing reflections before step ii) according to claim 1.

8. Method according to any of the preceding claims, in which the component (2) is coated and, in parallel therewith, a main body (13), which is different from the component (2), is coated in order to characterize the coating (14).

9. Method according to any of the preceding claims, in which the coating is a thermally sprayed coating.

10. Method according to any of the preceding claims, in which the coating is heat-treated after application, wherein step iii) is carried out prior to the heat treatment.

11. Method according to any of the preceding claims, in which the component (2) is a housing part (2).

12. Method according to claim 11, in which the coating (14) is a run-in lining of the housing part (2).

13. Device (21) for characterizing a coating (14), having
a receptacle (12) for arranging a main body (13),
an optical measuring unit (16) for measuring the volume of the main body (13) arranged in the receptacle (12),
a weighing unit (11) for measuring the mass of the main body (13) arranged in the receptacle (12), and
a control unit (22),
wherein the control unit (22) is configured, when the main body (13) is arranged in the receptacle (12) prior to and after coating, to initiate the measuring unit (16) and the weighing unit (11) to carry out the steps according to the numbers i) and ii) according to claim 1 and to determine the density of the coating (14) according to number iii).

14. Computer program product, comprising commands which, when executed by a control unit (12) of a device (21) according to claim 13, initiate this device to initiate and carry out steps i) to iii) according to claim 1.

## Revendications

1. Procédé de fabrication d'une pièce pour une turbomachine (1), dans lequel la pièce (2) est revêtue,
dans lequel le revêtement (14) est **caractérisé par le fait que**
i) une masse et/ou un volume d'un corps de base (13) sont mesurés avant le revêtement ;
ii) une masse et un volume du corps de base (13) comportant le revêtement (14) appliqué sont mesurés ;
iii) pour caractériser le revêtement (14), une densité du revêtement (14) est déterminée à partir des mesures du volume et de la masse ;
dans lequel le volume est mesuré optiquement.

2. Procédé selon la revendication 1, dans lequel la mesure optique est effectuée dans un procédé de projection de lumière rasante.

3. Procédé selon l'une des revendications précédentes, dans lequel une densité du corps de base (13) est connue et seul le volume ou la masse est mesuré avant le revêtement.

4. Procédé selon l'une des revendications précédentes, dans lequel, lors de la mesure optique du volume, une rugosité de surface du revêtement (14) est mesurée optiquement en même temps.

5. Procédé selon la revendication 4, dans lequel la rugosité de surface du revêtement (14) est retravaillée dans un modèle établi à l'aide de la mesure du volume pour l'ajuster à une mesure mécanique.

6. Procédé selon l'une des revendications précédentes, dans lequel le revêtement (14) possède une épaisseur de couche d'au moins 0,05 mm et d'au plus 5 mm.

7. Procédé selon l'une des revendications précédentes, dans lequel, avant même l'étape ii) conformément à la revendication 1, une surface (15) à mesurer du revêtement (14) est traitée avec un agent permettant de réduire les réflexions.

8. Procédé selon l'une des revendications précédentes, dans lequel la pièce (2) est revêtue et, en parallèle, un corps de base (13) différent de la pièce (2) est ainsi revêtu pour caractériser le revêtement (14).

9. Procédé selon l'une des revendications précédentes, dans lequel le revêtement est un revêtement appliqué par projection thermique.

10. Procédé selon l'une des revendications précédentes, dans lequel le revêtement est traité thermiquement après son application, dans lequel l'étape iii) est réalisée avant le traitement thermique.

11. Procédé selon l'une des revendications précédentes, dans lequel la pièce (2) est une partie de boîtier (2).

12. Procédé selon la revendication 11, dans lequel le revêtement (14) est une garniture de rodage de la partie de boîtier (2).

13. Dispositif (21) permettant de caractériser un revêtement (14), comportant
un logement (12) destiné à la disposition d'un corps de base (13),
une unité de mesure optique (16) permettant de mesurer le volume du corps de base (13) disposé dans le logement (12),
une unité de pesage (11) permettant de mesurer la masse du corps de base (13) disposé dans le logement (12), et
une unité de commande (22),
dans lequel l'unité de commande (22) est configurée pour, lorsque le corps de base (13) est disposé dans le logement (12) avant et après le revêtement, amener l'unité de mesure (16) et l'unité de pesage (11) à réaliser les étapes conformément aux points i) et ii) selon la revendication 1 et à déterminer la densité du revêtement (14) conformément au point iii).

14. Produit programme informatique présentant des instructions qui, lorsqu'elles sont exécutées par une unité de commande (12) d'un dispositif (21) conformément à la revendication 13, amènent celui-ci à initier et à réaliser les étapes i) à iii) selon la revendication 1.
